# NEW EUROPEAN PATENT SPECIFICATION

(11) **EP 2 248 408 B2**
(45) Date of publication and mention of the opposition decision: **03.04.2019**
(45) Mention of the grant of the patent: 11.02.2015
(21) Application number: 10004424.7
(22) Date of filing: 27.04.2010
(51) Int. Cl.: A01D 34/66, A01B 63/10

(54) **Lifting mechanism**
Hebemechanismus
Mécanisme de levage

(30) Priority: 29.04.2009 GB 0907357
(43) Date of publication of application: 10.11.2010
(73) Proprietor: Kverneland ASA, 4344 Kvernaland (NO)
(72) Inventor: Friis, Sven Aabjerg, 5300 Kerteminde (DK)
(74) Representative: Higgs, Jonathan

(56) References cited:
- EP-A1- 0 839 443
- EP-A1- 0 839 443
- EP-A1- 1 050 205
- EP-A2- 0 734 645
- EP-A2- 1 209 365
- DE-U1- 20 109 019
- DE-U1- 20 219 242
- DE-U1- 20 316 727
- GB-A- 1 019 398
- GB-A- 2 145 912
- NL-C2- 1 020 593
- US-A- 2 755 776
- US-A- 4 048 789

## Description

The present invention relates to a lifting mechanism and in particular, but not exclusively, to a lifting mechanism for a mower, such as an agricultural mower.

It is known to provide an agricultural mower comprising a cutter unit having a number of rotating cutter discs, a support arm for supporting the cutter unit and a mounting structure for mounting the mower on a tractor. The support arm is attached to the mounting structure through a pivot that allows the position of the cutter unit to be adjusted. The cutter unit may for example be adjusted to a cutting position in which it engages the ground, a headland position in which the cutter unit is slightly raised from the ground to allow the tractor to turn when it reaches the headland (the edge of a field), and a transport position in which the cutter unit is folded behind the tractor. When the cutter unit is in the cutting position, it usually extends outwards to one side of the tractor: lifting the cutter unit to the transport position allows the tractor to drive down a public road without the cutter unit extending outwards beyond the tractor.

A hydraulic cylinder is usually provided to lift the cutter unit from the cutting position to the headland position or the transport position. A support spring is also usually provided, which carries part of the weight of the cutter unit when it is in the cutting position. This allows the cutter unit to rest lightly on the ground (for example with a force of about 100kgs) and follow the contours of the ground during a mowing operation.

When the cutter unit is lifted to the headland position it engages a stop to prevent further movement beyond that point. The stop can be displaced (for example with a control cord) to allow the cutter unit to be lifted past the stop to the transport position. When the cutter unit is lifted to the headland position the arm is pressed against the stop with the full force of the hydraulic system. We have found that this places very high loads on the mechanism, which in time can cause components of the mechanism to fail.

When the cutter is lifted to the transport position it engages a second stop to limit movement. However, as the cutter is lifted to the transport position at a high speed, it has a large inertia and strikes the stop with a great force. This also results in large forces being distributed throughout the mechanism, which can again result in mechanical failure.

EP0839443 discloses a cutting machine fitted with an automatic retractable stop.

It is an object of the present invention to provide a lifting mechanism that mitigates one or more of the aforesaid disadvantages.

According to the present invention there is provided a lifting mechanism as defined by the claims.

The actuator is arranged to close the valve as the arm reaches the second position, thereby preventing further movement of the arm. A mechanical stop is not required and therefore the large stresses encountered in earlier mechanisms that use a mechanical stop are avoided. This makes the mechanism more reliable and less likely to fail. Although the valve closes as the arm reaches the second position, operation of the actuator and the valve is designed to ensure that when the pressure of the hydraulic drive fluid is reversed, the arm returns to the first position.

The lifting mechanism may be designed for use with an agricultural mower or any other suitable apparatus. The second arm position is a headland position.

The arm is arranged for movement to a third position, which is a raised, non-working position. The third position is a transport position. In the case of a mower, this allows the cutter unit to be folded behind the tractor, allowing it to be driven down a public road.

The lifting mechanism includes a control means that is operable to allow movement of the arm beyond the second position to the third position. The control means thus over-rides normal operation of the valve, which prevents further movement when the arm reaches the second position. The control means is constructed and arranged to move the valve to a third operational condition in which flow is permitted. The valve is arranged such that when it is in the third operational condition, the flow of hydraulic fluid is permitted at a reduced flow rate, as compared to the flow rate when the valve is in the first operational condition, and hydraulic fluid is directed through a flow restrictor. This ensures that movement of the arm to the third position takes place at a relatively slow speed, to avoid placing excessive mechanical stresses on the mechanism.

The lifting mechanism may be designed for use with an agricultural mower or any other suitable apparatus, in which the first position is a working position and the second position is a raised non-working position. Advantageously, the arm is arranged to pivot about a substantially horizontal pivot axis.

The third position is a transport position. In the case of a mower, this allows the cutter unit to be folded behind the tractor, allowing it to be driven down a public road. The second position is a headland position. For a mower this allows the cutter unit to be raised slightly above the ground, allowing the tractor to make a sharp turn.

Advantageously, the control means comprises a manual control, for example a control cord operable from the cab of a tractor, which moves the valve to the third operational condition. Alternatively, the control means may comprise an electrical control, for example a control switch operable from the cab of a tractor, which operates an actuator to move the valve to the third operational condition

Advantageously, the actuator is constructed and arranged to hold the valve in the second condition if operation of the control means ceases while the arm is between the second and third positions. This provides a safety feature, which ensures that movement of the arm to and from the third position cannot take place accidentally, for example if the hydraulic controls are inadvertently actuated. Similarly, if the control means is released during movement of the arm between the second and third positions, movement of the arm will immediately cease.

Advantageously, the hydraulic drive means includes a lost motion mechanism that permits limited pivoting movement of the arm in the first position. In the case of a mower, this allows the cutter unit to follow the contours of the ground during a mowing operation.

Advantageously, the hydraulic drive means is constructed and arranged to act between the mounting structure and the arm.

Advantageously, the lifting mechanism includes a support element for supporting the arm in the first position. Preferably, the support element comprises a spring. The support mechanism carries some of the weight of the arm and any mechanism carried by the arm. In the case of a mower, this ensures that the cutter unit rests relatively lightly on the ground, to avoid excessive drag.

According to another aspect of the invention there is provided a mower including a lifting mechanism according to any one of the preceding statements of invention, and a cutter unit attached to and supported by the arm. Advantageously, the support structure is arranged for attachment to, or is attached to, a tractor.

An embodiment of the invention will now be described, by way of example, with reference to the accompanying drawings, in which:
Figures 1, 2 and 3 are front views showing a mower unit in a cutting position, a headland position and a transport position respectively;
Figures 4 and 5 are plan views showing the mower unit in a working position and a headland position respectively;
Figures 6, 7 and 8 are perspective views showing components of a lifting mechanism for the mower unit in a working position, a headland position and a transport position respectively, and
Figures 9, 10 and 11 are schematic diagrams of a hydraulic circuit for the lifting mechanism, showing a control valve in a first condition, a second condition and a third condition respectively.

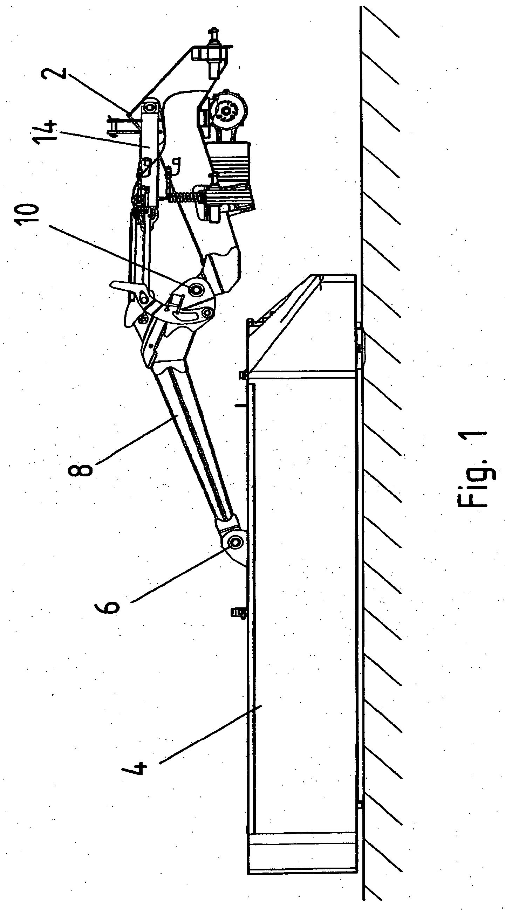

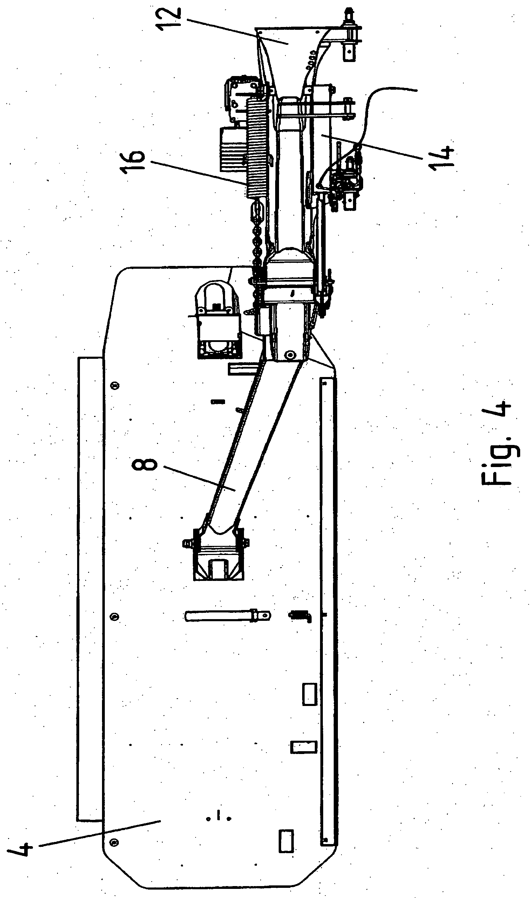

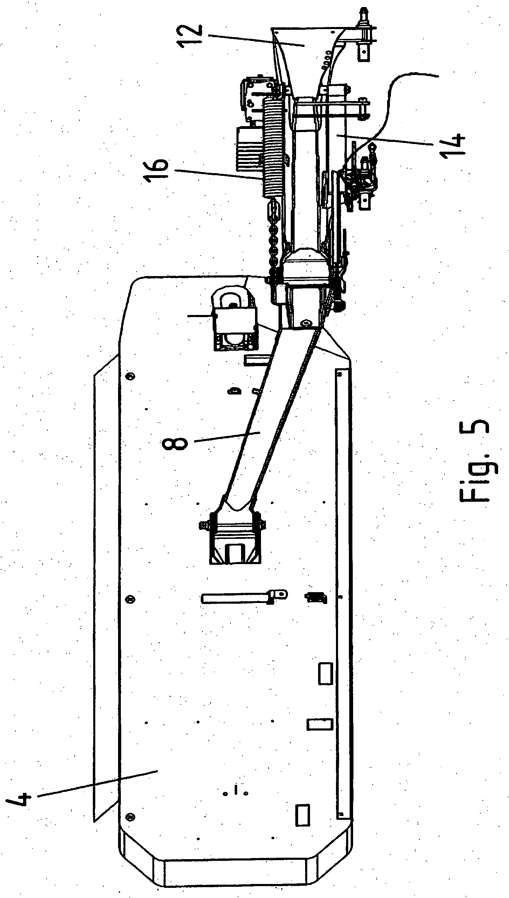

As shown particularly in Figures 1 to 8, the lifting mechanism 2 is attached to a conventional cutter unit 4, which may for example be similar to that described in WO99/18769A. The cutter unit 4 includes a housing that contains a number of rotating cutter discs (not shown). It may optionally also include a conditioner unit (not shown). The cutter unit 4 is attached through a pivot 6 to a support arm 8. The pivot 6 allows the cutter unit 4 to rock so that it can follow the contours of the ground during a mowing operation.

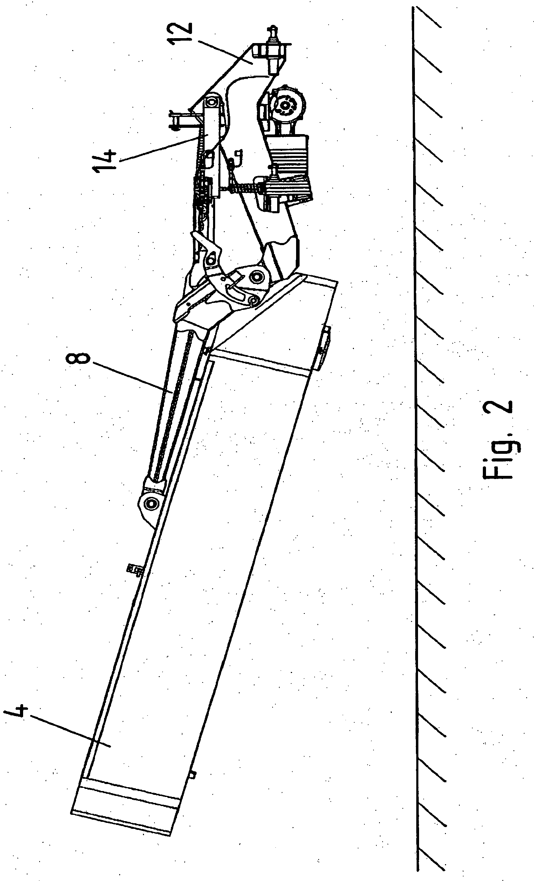

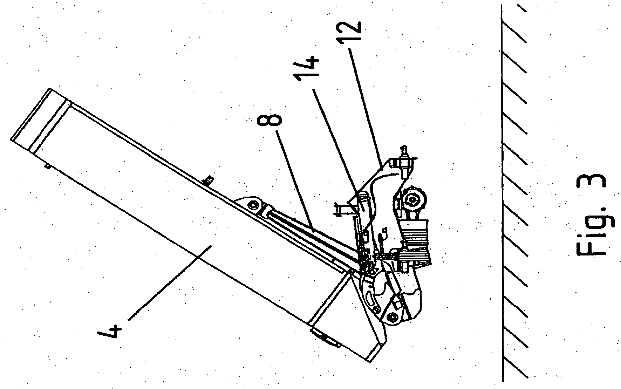

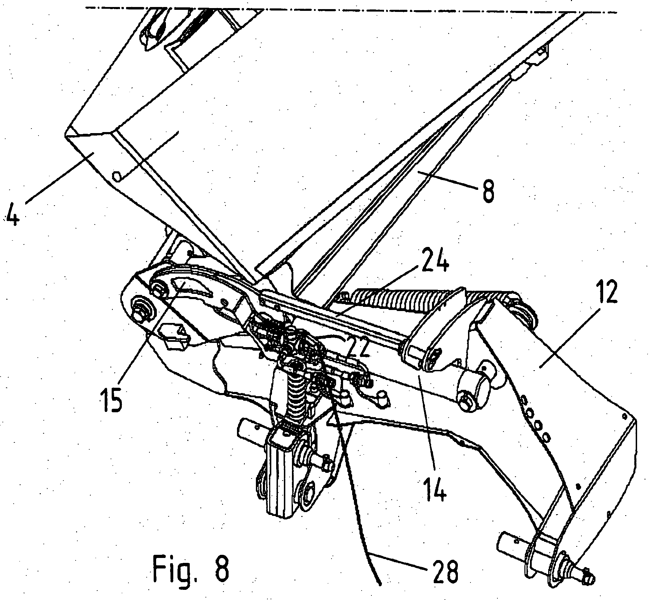

The arm 8 is attached through a pivot 10 to a mounting structure 12, which in use is mounted on a tractor (not shown). Usually, the mower unit is mounted on the rear of a tractor, although it can alternatively be mounted on the front or side of a tractor. The pivot 10 allows the arm 8 to be lifted from the working position shown in Figures 1, 4 and 6 to a headland position shown in Figures 2, 5 and 7 or a transport position shown in Figures 3 and 8. When the arm is in the working position shown in Figures 1, 4 and 6, the cutter unit 4 engages the ground so that the rotating cutters sever the standing crops close to ground level. In the headland position shown in Figures 2, 5 and 7 the cutter unit 4 is raised slightly above the ground, allowing the tractor to turn when it reaches the headland of the field. In the transport position shown in Figures 3 and 8, the arm 8 is lifted further so that the cutter unit 4 is folded behind the tractor. This allows the tractor to be driven down a public road without the cutter unit 4 extending outwards to one side of the tractor.

The lifting mechanism includes a hydraulic cylinder 14 that is attached at a first end 14a to a pivot on the mounting structure 12. The second end 14b of the hydraulic cylinder 14 is attached to an actuating lever 15, which is attached to a pivot point 8a on the arm. A stop 8b is provided on the arm, for engagement with the lever 15 when the arm is lifted. The hydraulic cylinder 14 can be actuated to lift the cutter unit 4 from the working position to the headland position or the transport position. By reversing the flow of fluid through the hydraulic system, the cutter unit 4 can be returned to the working position.

The lifting mechanism also includes a strong coil spring 16, one end of which is attached to the support structure 12, the other end being attached through an adjustable chain 18 to the arm 8. When the mower is in the working position, the spring 16 is in tension and partially supports the weight of the cutter unit 4, so that the cutter unit rests only lightly against the ground. This allows the cutter unit to follow the contours of the ground during mowing. When the mower is in the working position, a gap is provided between the lever 15 and the stop 8b. This gap provides a lost motion mechanism in the connection between the hydraulic cylinder 14 and the arm 8 to allow for movement of the arm 8 during mowing.

The hydraulic cylinder 14 is connected to a hydraulic system that includes a control valve 20 having a control lever 22. The valve 20 controls the flow of hydraulic fluid to and from the cylinder 14, as will be described in more detail below.

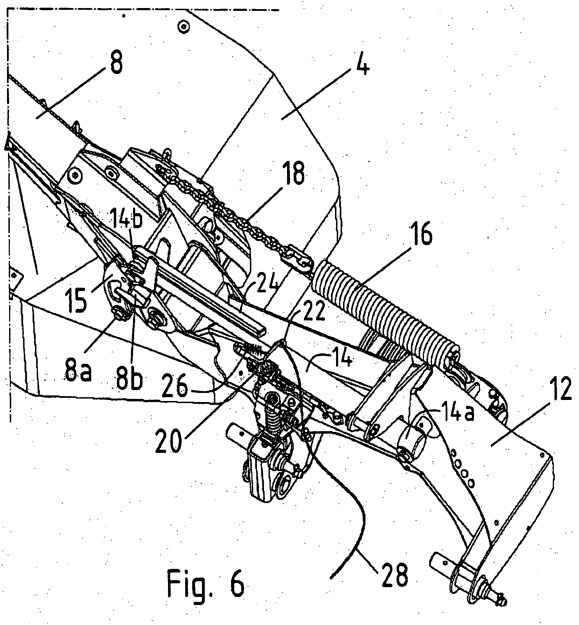

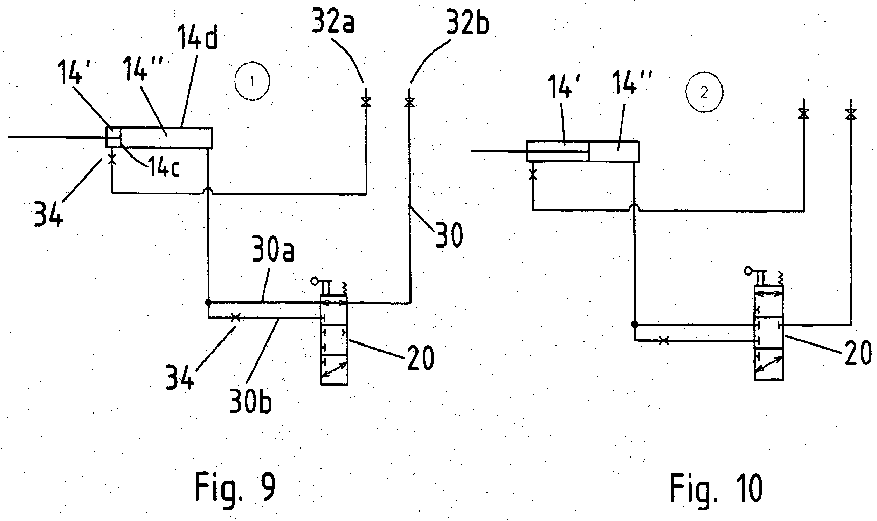

The valve 20 is operated by an actuator rod 24 that is attached to the second end 14b of the piston rod. When the arm 8 is in the working position shown in Figure 6, the actuator rod 24 is withdrawn from contact with the lever 22, which is held in an anticlockwise-rotated direction by a biasing spring 26. This places the valve in a first operative condition, illustrated in Figure 9.

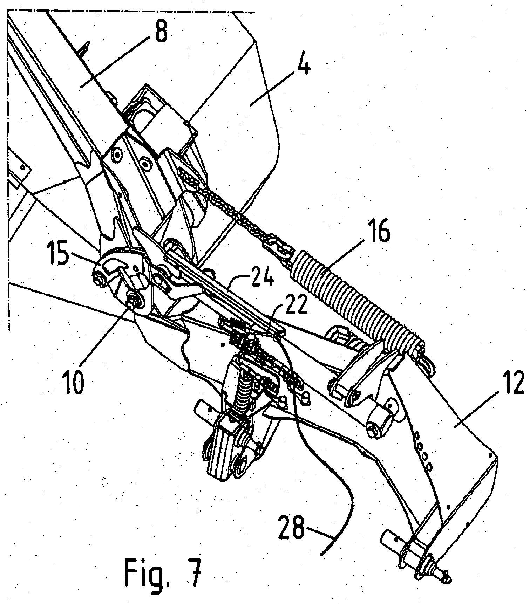

When the arm 8 is raised to the headland position shown in Figure 7, the actuator rod 24 engages the valve lever 22 and rotates it clockwise against the force of the biasing spring 26. This moves the valve 20 towards the second operating condition shown in Figure 10.

A control cord 28 is attached to the lever 22. This cord 28 extends to a position where it can be reached by an operator, for example within the cab of the tractor. Pulling the cord 28 allows the operator to rotate the valve lever 22 clockwise, thus overriding the biasing spring 26 and the actuator rod 24.

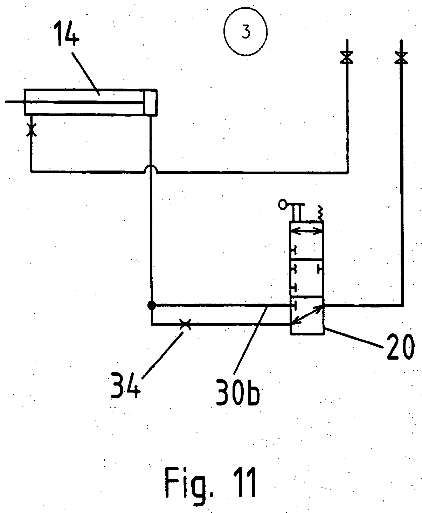

In order to lift the arm 8 to the transport position shown in Figure 8, the valve lever 22 must be rotated further in a clockwise direction to place the valve in a third operational condition as illustrated in Figure 11. This is achieved by pulling the control cord 28, as shown in Figure 8. If the control cord 28 is subsequently released, the valve lever 22 will rotate anticlockwise under action of the spring 26 until it contacts the actuator rod 24, thus returning the valve 20 to the second operational condition.

The hydraulic circuit of the lifting mechanism is shown in Figures 9 to 11. The circuit includes the hydraulic cylinder 14, the valve 20, a number of fluid flow lines 30 and two connectors 32a, 32b for connecting the hydraulic circuit to the hydraulic drive system of a tractor (not shown). A number of flow restriction valves 34 are provided in certain of the fluid flow lines 30. The hydraulic cylinder 14 is conventional and comprises a piston 14c and a cylinder barrel 14d, wherein the piston 14c divides the internal volume of the cylinder barrel 14d into a left hand chamber 14' and a right hand chamber 14". The left hand chamber 14' is connected directly to the first connector 32a and the right hand chamber 14" is connected via the valve 20 to the second connector 32b.

As described previously, the valve 20 has three operational conditions. In Figure 9 the valve is shown in the first operational condition, in which hydraulic fluid can flow to and from the right hand chamber 14" of the hydraulic cylinder 14 through a first unrestricted flow line 30a. In Figure 10, the valve is shown in the second operational condition in which the valve is closed, preventing any flow of fluid to or from the right hand chamber 14". In Figure 11, the valve is shown in the third operational condition, in which hydraulic fluid can flow to and from right hand chamber 14" through a second flow line 30b that includes a flow restriction valve 34.

Operation of the lifting mechanism will now be described.

During mowing, the cutter unit 4 is placed in the working position shown in Figures 1, 4 and 6. The valve 20 is in the first operating condition illustrated in Figure 9, which permits unrestricted flow of hydraulic fluid to and from the hydraulic cylinder 14. This allows the cutter unit to be raised or lowered by adjusting the pressure in the left hand chamber 14' of the hydraulic cylinder through the first connector 32a. The fluid displaced from the right hand chamber 14" flows to and from an unpressurised reservoir through the second connector 32b. During mowing, the hydraulic drive system is usually set to extend the piston 14c fully, as shown in Figure 9. In this position, owing to the provision of a lost motion mechanism between the piston rod and the arm 8, the hydraulic cylinder does not exert any force on the arm. The arm can therefore rotate to a limited degree about the arm pivot 10. The weight of the cutter unit 4 is supported partially by the spring 16, so that the cutter unit rests lightly on the ground.

When the tractor reaches a headland, the hydraulic cylinder 14 is operated to lift the cutter unit 4 to the headland position shown in Figures 2, 5 and 7. Fluid is supplied under pressure to the left hand chamber 14' from the first connector 32a, forcing the piston 14c to the right and lifting the arm 8. As the arm 8 nears the headland position, the actuator rod 24 engages the valve lever 22 and rotates it clockwise against the bias of the spring 26. This moves the valve 20 towards the second operational condition shown in Figure 10.

The actuator rod 24 is set so that when the arm 8 reaches the headland position, the valve 20 closes to prevent fluid escaping from the right hand chamber 14", thereby preventing further movement of the arm 8. This locks the arm in the headland position.

In order to lower the arm from the headland position, the pressure supplied to the left hand chamber 14' is reduced. The weight of the arm 8 and the cutter unit 4 is then sufficient to pull the piston 14c to the left, forcing fluid back through the first connector 32a and creating a partial vacuum in the right hand chamber 14". As the piston moves to the left, the actuator rod 24 disengages the valve 20, allowing it to return to the first operational condition shown in Figure 9. This allows the cutter unit 4 to be lowered again to the working position.

As mentioned previously, in order to raise the arm 8 to the transport position, the control cord 28 must be operated to move the valve 20 to the third operational condition as shown in Figure 11. This allows hydraulic fluid to flow to and from the hydraulic cylinder 14 through the restrictor valve 34 in the second flow line 30b. The restrictor valve 34 limits the flow rate of hydraulic fluid, ensuring that movement of the arm 8 between the headland position and the transport position is relatively slow. This in turn ensures that the stresses induced in the mechanism by operation of the lifting mechanism are greatly reduced, thereby reducing the risk of mechanical failure.

If the valve control cord 28 is released during movement of the arm between the headland position and the transport position (either when raising or lowering the arm), the valve 20 will return to the second operational condition shown in Figure 10 under the bias of the spring 26. This cuts off the flow of hydraulic fluid, preventing further movement of the arm. The arm cannot then be moved until the control cord 28 is pulled again, to move the valve 20 to the third operational condition. This acts as a safety feature ensuring that the mower cannot be lowered accidentally by inadvertently activating the tractor hydraulics. The mower will only move from the transport position if the control cord 28 is pulled and the tractor hydraulics are operated at the same time.

Various modifications of the mechanism described herein are of course possible. For example, the valve control cord 28 may be replaced by an electrical control, for example a switch operable from the cab that operates the valve via an electrical actuator.

## Claims

1. A lifting mechanism (2) comprising a mounting structure (12), an arm attached to the mounting structure (12) through a pivot (10), said arm (8) being arranged for movement about the pivot (10) between a first position which is a working position, a second position which is a raised, non-working headland position, and a third position which is a raised, non-working transport position, hydraulic drive means (14) for rotating the arm (8) about the pivot (10), a hydraulic circuit for supplying drive fluid to the hydraulic drive means (14), said hydraulic circuit including a valve (20) for controlling the flow of hydraulic fluid through the circuit, said valve (20) having a first operational condition in which flow is permitted, a second operational condition in which flow is prevented, and a third operational condition in which the hydraulic fluid is directed through a flow restrictor and the flow of hydraulic fluid is permitted at a reduced flow rate, and an actuator (24) for actuating the valve (20), said actuator (24) being constructed and arranged to move the valve (20) from the first operational condition to the second operational condition when the arm (8) moves from the first position to the second position, and a control means that is constructed and arranged to move the valve to the third operational condition and is operable to allow movement of the arm beyond the second position to the third position.

2. A lifting mechanism according to claim 1, wherein the control means comprises a manual control.

3. A lifting mechanism according to any one of claims 1 to 2, wherein the control means comprises an electrical control.

4. A lifting mechanism according to any one of claims 1 to 3, wherein the actuator is constructed and arranged to hold the valve in the second condition if operation of the control means ceases while the arm is between the second and third positions.

5. A lifting mechanism according to any one of the preceding claims, in which the hydraulic drive means includes a lost motion mechanism that permits limited pivoting movement of the arm in the first position.

6. A lifting mechanism according to any one of the preceding claims, in which the hydraulic drive means is constructed and arranged to act between the mounting structure and the arm.

7. A lifting mechanism according to any one of the preceding claims, including a support element for supporting the arm in the first position.

8. A lifting mechanism according to claim 7, in which the support element comprises a spring.

9. A mower including a lifting mechanism according to any one of the preceding claims, and a cutter unit attached to and supported by the arm.

10. A mower according to claim 9, in which the support structure is arranged for attachment to, or is attached to, a tractor.

## Patentansprüche

1. Hebemechanismus (2), umfassend eine Anbringungsstruktur (12), einen an der Anbringungsstruktur (12) mittels eines Drehgelenks (10) angebrachten Arm, wobei der Arm (8) angeordnet ist zur Bewegung um das Drehgelenk (10) herum zwischen einer ersten Stellung, die eine Arbeitsstellung ist, einer zweiten Stellung, die eine angehobene, Nicht-Arbeits-Vorgewende-Stellung ist, und einer dritten Stellung, die eine angehobene, Nicht-Transportstellung ist, hydraulische Antriebseinrichtung (14) zum Drehen des Arms (8) um das Drehgelenk (10) herum, einen Hydraulikschaltkreis zum Versorgen der hydraulischen Antriebseinrichtung (14) mit Antriebsfluid, wobei der Hydraulikschaltkreis ein Ventil (20) zum Steuern des Hydraulikfluidstroms durch den Schaltkreis umfasst, wobei das Ventil (20) einen ersten Betriebszustand, in dem ein Strömen ermöglicht wird, einen zweiten Betriebszustand, in dem ein Strömen verhindert wird, und einen dritten Betriebszustand, in dem das Hydraulikfluid durch einen Durchflussbegrenzer hindurch geleitet wird und der Hydraulikfluidstrom mit einer reduzierten Durchflussmenge ermöglicht wird, aufweist, und einen Stellantrieb (24) zum ansteuern des Ventils (20), wobei der Stellantrieb (24) dazu gestaltet und angeordnet ist, das Ventil (20) vom ersten Betriebszustand zum zweiten Betriebszustand zu bewegen, wenn sich der Arm (8) von der ersten Stellung zur zweiten Stellung bewegt, und eine Steuereinrichtung, die dazu gestaltet und angeordnet ist, das Ventil zum dritten Betriebszustand zu bewegen, und dazu betreibbar ist, eine Bewegung des Arms über die zweite Stellung hinaus zur dritten Stellung zu ermöglichen.

2. Hebemechanismus nach Anspruch 1, wobei die Steuereinrichtung eine manuelle Steuerung umfasst.

3. Hebemechanismus nach einem der Ansprüche 1 bis 2, wobei die Steuereinrichtung eine elektrische Steuerung umfasst.

4. Hebemechanismus nach einem der Ansprüche 1 bis 3, wobei der Stellantrieb dazu gestaltet und angeordnet ist, das Ventil im zweiten Zustand zu halten, wenn der Betrieb der Steuereinrichtung aufhört, während der Arm zwischen der zweiten und dritten Stellung ist.

5. Hebemechanismus nach einem der vorhergehenden Ansprüche, in dem die hydraulische Antriebseinrichtung einen Totgangmechanismus umfasst, der eine begrenzte Drehbewegung des Arms in der ersten Stellung erlaubt.

6. Hebemechanismus nach einem der vorhergehenden Ansprüche, in dem die hydraulische Antriebseinrichtung dazu gestaltet und angeordnet ist, zwischen der Anbringungsstruktur und dem Arm zu wirken.

7. Hebemechanismus nach einem der vorhergehenden Ansprüche, umfassend ein Unterstützungselement zum Unterstützen des Arms in der ersten Stellung.

8. Hebemechanismus nach Anspruch 7, in dem das Unterstützungselement eine Feder umfasst.

9. Mähmaschine, umfassend einen Hebemechanismus nach einem der vorhergehenden Ansprüche, und eine Schneideinheit, die am Arm angebracht ist und von diesem unterstützt ist.

10. Mähmaschine nach Anspruch 9, in der die Unterstützungsstruktur zur Anbringung an einem Traktor angeordnet ist oder an einem Traktor angebracht ist.

## Revendications

1. Mécanisme de levage (2) comprenant une structure de montage (12), un bras fixé à la structure de montage (12) grâce à un pivot (10), ledit bras (8) étant agencé pour se déplacer autour du pivot (10) entre une première position qui est une position de travail, une deuxième position qui est une position de tournière non active surélevée, et une troisième position qui est une position de transport non active surélevée, des moyens d'entraînement hydrauliques (14) permettent de faire tourner le bras (8) autour du pivot (10), un circuit hydraulique destiné à alimenter en fluide d'entraînement les moyens d'entraînement hydrauliques (14), ledit circuit hydraulique comprenant une soupape (20) destinée à réguler l'écoulement de fluide hydraulique à travers le circuit, ladite soupape (20) présentant un premier état de fonctionnement dans lequel l'écoulement est permis, un deuxième état de fonctionnement dans lequel l'écoulement n'est pas permis, et un troisième état de fonctionnement dans lequel le fluide hydraulique est dirigé à travers un réducteur de débit et l'écoulement de fluide hydraulique est permis à un débit réduit, et un actionneur (24) destiné à actionner la soupape (20), ledit actionneur (24) étant conçu et agencé pour déplacer la soupape (20) à partir du premier état de fonctionnement vers le deuxième état de fonctionnement lorsque le bras (8) se déplace à partir de la première position jusqu'à la deuxième position, et un moyen de commande qui est conçu et agencé pour déplacer la soupape vers le troisième état de fonctionnement et sert à permettre un déplacement du bras au-delà de la deuxième position jusqu'à la troisième position.

2. Mécanisme de levage selon la revendication 1, ledit moyen de commande comprenant une commande manuelle.

3. Mécanisme de levage selon l'une quelconque des revendications 1 à 2, ledit moyen de commande comprenant une commande électrique.

4. Mécanisme de levage selon l'une quelconque des revendications 1 à 3, ledit actionneur étant conçu et agencé pour maintenir la soupape dans le deuxième état si le fonctionnement du moyen de commande cesse tandis que le bras est entre les deuxième et troisième positions.

5. Mécanisme de levage selon l'une quelconque des revendications précédentes, ledit moyen d'entraînement hydraulique comprenant un mécanisme de perte de mouvement qui permet un mouvement de pivotement limité du bras dans la première position.

6. Mécanisme de levage selon l'une quelconque des revendications précédentes, ledit moyen d'entraînement hydraulique étant conçu et agencé pour agir entre la structure de montage et le bras.

7. Mécanisme de levage selon l'une quelconque des revendications précédentes, comprenant un élément de support destiné à supporter le bras dans la première position.

8. Mécanisme de levage selon la revendication 7, ledit élément de support comprenant un ressort.

9. Faucheuse comprenant un mécanisme de levage selon l'une quelconque des revendications précédentes, et une unité de coupe fixée au bras et supportée par le bras.

10. Faucheuse selon la revendication 9, ladite structure de support étant agencée pour être fixée à un tracteur, ou est fixée à un tracteur.
